**Europäisches Patentamt**

**European Patent Office**

**Office européen des brevets**

(19)

(11) Veröffentlichungsnummer: **0 213 341**
**B1**

(12) **EUROPÄISCHE PATENTSCHRIFT**

(45) Veröffentlichungstag der Patentschrift:
**11.10.89**

(51) Int. Cl.⁴: **F16J 15/32**

(21) Anmeldenummer: **86109544.6**

(22) Anmeldetag: **11.07.86**

(54) **Bürstendichtung.**

(30) Priorität: **31.07.85 DE 3527499**
**27.02.86 DE 3606283**

(43) Veröffentlichungstag der Anmeldung:
**11.03.87 Patentblatt 87/11**

(45) Bekanntmachung des Hinweises auf die Patenterteilung:
**11.10.89 Patentblatt 89/41**

(84) Benannte Vertragsstaaten:
**DE FR GB IT SE**

(56) Entgegenhaltungen:
**EP-A- 0 021 844**
**DE-C- 3 429 708**
**FR-A- 2 218 287**
**FR-A- 2 252 516**

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Merz, Herbert, Donauwörther Strasse 21, D-8000 München 50(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Bürstendichtung zur Anwendung in thermischen Turbomaschinen, insbesondere zur Abdichtung von Umfangsspalten.

Bisher sind Bürstendichtungen zur Abdichtung von Umfangsspalten bekannt geworden, deren Borsten aus verschleißfesten, organischen Materialien bestehen. Darüber hinaus ist es aus der FR-A 2 252 516 bekannt, metallische Borsten für Bürstendichtungen zu verwenden, wobei dann, wenn die Bürstendichtungen thermischen Belastungen ausgesetzt sind, üblicherweise Metallborsten bzw. -drähte aus sogenannten Superlegierungen verwendet werden.

Es hat sich gezeigt, daß die Anwendung von Bürstendichtungen mit metallischen Borsten in thermischen Turbomaschinen nicht den gewünschten Erfolg bringt, was insbesondere darauf zurückzuführen ist, daß die einzelnen Drahtborsten bei hohen Temperaturen ihre Elastizität verlieren und sich teilweise verbiegen. Auch die Notwendigkeit, metallische Bürstendichtungen mit hohem Übermaß in die Maschinen einzubauen, führte bei den hohen Drehzahlen von Turbomaschinen zu unerwünscht starken Einlaufreibungen und entsprechendem Verschleiß der Wellensitze und der Bürstendichtungen selbst.

Aufgabe der vorliegenden Erfindung ist es deshalb, eine für die Anwendung in thermischen Turbomaschinen geeignete Bürstendichtung zu schaffen.

Erfindungsgemäß wird diese Aufgabe dadurch gelöst, daß als Borstenmaterial Keramikfasern verwendet werden. Durch die Anwendung von keramischen Borsten wird auch bei hohen Betriebstemperaturen die Gefahr plastischer Verformungen ausgeschlossen, d. h. die Elastizität der Borsten bleibt voll erhalten. Ein weiterer Vorteil der keramischen Borsten besteht in dem geringen Reibwert zwischen Keramikmaterialien und Stahl bzw. Keramikmaterial und den üblichen Hartstoffbeschichtungen von Turbomaschinenwellen. Weitere Vorteile von Keramikborsten sind die hohe Abriebbeständigkeit und die hohe Beständigkeit gegen aggressive Heißgase und Öldämpfe, wie sie insbesondere bei thermischen Turbomaschinen auftreten.

Zwar sind aus der FR-A 2 218 287 Fasern aus Oxidkeramik und ein Verfahren zu deren Herstellung bekannt. Ein Hinweis darauf, solche Oxidkeramikfasern für Bürstendichtungen zu verwenden, finden sich jedoch nicht. Im übrigen wären Fasern der dort offenbarten Zusammensetzung für Bürstendichtungen wohl auch nicht geeignet. Die EP-A 21 844 offenbart war Fasern, die die Elemente Silizium, Titan und Kohlenstoff aufweisen sollen; weder läßt jedoch die Zusammensetzung auf hohe Elastizität dieser Fasern schließen noch gibt es einen Hinweis in dieser Druckschrift, diese Fasern als Borsten einsetzen zu können.

Bevorzugte Keramikmaterialien für Keramikfasern sind in den Patentansprüchen 2–5 angegeben. Es hat sich gezeigt, daß Bürstendichtungen mit solchen Keramikfasern ihre Elastizität und damit ihre volle Dichtwirkung bis in Temperaturbereiche von 1000°C behalten.

**Patentansprüche**

1. Bürstendichtung zur Anwendung in thermischen Turbomaschinen, insbesondere zur Abdichtung von Umfangsspalten, dadurch gekennzeichnet, daß als Borstenmaterial Keramikfasern verwendet werden.

2. Bürstendichtung nach Anspruch 1, dadurch gekennzeichnet, daß die Keramikfasern aus nichtoxidischer Keramik auf der Basis von $Si_3N_4$ oder $SiC$ bestehen.

3. Bürstendichtung nach Anspruch 2, dadurch gekennzeichnet, daß der Keramikfaserwerkstoff 5 bis 30 Prozent (Gewicht) $SiO_2$, 2 bis 15 Prozent C und als Rest zu 100 Prozent $SiC$ enthält.

4. Bürstendichtung nach Anspruch 2, dadurch gekennzeichnet, daß der Keramikfaserwerkstoff 5 bis 25 Prozent $SiO_2$, 2 bis 15 Prozent C, 2 bis 15 Prozent $TiO_2$ und als Rest zu 100 Prozent $SiC$ enthält.

5. Bürstendichtung nach Anspruch 1, dadurch gekennzeichnet, daß die Keramikfasern aus oxidischer Keramik, vorzugsweise aus $\alpha$-$Al_2O_3$ oder $\gamma$-$Al_2O_3 . SiO_2$ bestehen.

**Claims**

1. Brush seal for use in thermal turbo engines, in particular for sealing peripheral gaps, characterised in that ceramic fibres are used as bristle material.

2. Brush seal according to claim 1, characterised in that the ceramic fibres comprise non-oxidic ceramics based on $Si_3N_4$ or $SiC$.

3. Brush seal according to claim 2, characterised in that the ceramics fibre material contains 5 to 30% (by weight) of $SiO_2$, 2 to 15% C, and the remainder $SiC$ to 100%.

4. Brush seal according to claim 2, characterised in that the ceramic fibre material contains 5 to 25% $SiO_2$, 2 to 15% C, 2 to 15% $TiO_2$ and the remainder $SiC$ to 100%.

5. Brush seal according to claim 1, characterised in that the ceramic fibres are of oxide ceramics, preferably $\alpha$-$Al_2O_3$ or $\gamma$-$Al_2O_3. SiO_2$.

**Revendications**

1. Joint d'étanchéité à brosse pour l'utilisation dans les turbomachines thermiques, notamment comme joint de jeux périphériques, caractérisé en ce qu'on utilise comme matériau de brosse des fibres céramique.

2. Joint d'étanchéité à brosse selon la revendication 1, caractérisé en ce que les fibres céramique sont constitués de céramique non oxyde; à base de $Si_3N_4$ ou de $SiC$.

3. Joint d'étanchéité à brosse selon la revendication 2, caractérisé en ce que le matériau de fibre céramique contient 5 à 30 pour-cent (en poids) de $SiO_2$, 2 à 15 pour-cent de C et le complément à 100 est du SiC.

4. Joint d'étanchéité à brosse selon la revendication 2, caractérisé en ce que le matériau de fibre céramique contient 5 à 25 pour-cent de $SiO_2$, 2 à 15 pour-cent de C, 2 à 15 pour-cent de $TiO_2$ et le complément à 100 est du SiC.

5. Joint d'étanchéité à brosse selon la revendication 1, caractérisé en ce que les fibres céramique sont constituées d'$\alpha$-$Al_2O_3$ ou de $\gamma$-$Al_2O_3$ . $SiO_2$.